# FASCICULE DE BREVET EUROPEEN

(11) **EP 0 354 113 B1**
(45) Date de publication et mention de la délivrance du brevet: **29.09.1993**
(21) Numéro de dépôt: 89402177.3
(22) Date de dépôt: 31.07.1989
(51) Int. Cl.: B60G 17/033, B60G 21/055, B60G 17/01

(54) **Dispositif de correction d'assiette d'un véhicule automobile**
Vorrichtung zur Lageregelung eines Kraftfahrzeuges
Apparatus for level control of a motor vehicle

(30) Priorité: 02.08.1988 FR 8810424
(43) Date de publication de la demande: 07.02.1990
(73) Titulaire: AUTOMOBILES PEUGEOT, 75116 Paris (FR); AUTOMOBILES CITROEN, 92200 Neuilly-sur-Seine (FR)
(72) Inventeur: Girard, Philippe, décédé (FR); Barthelemy, André, F-78470 Saint Remy-Les-Chevreuse (FR)
(74) Mandataire: Berger, Helmut

(56) Documents cités:
- EP-A- 0 152 914
- EP-A- 0 234 808
- EP-A- 0 270 327
- DE-A- 1 060 722
- DE-A- 3 502 338
- FR-A- 1 222 016
- FR-A- 1 488 979
- FR-A- 1 509 099
- FR-A- 2 177 946
- GB-A- 1 157 016

## Description

La présente invention a essentiellement pour objet un dispositif de correction d'assiette d'un véhicule automobile.

On a déjà proposé un certain nombre de solutions pour maintenir la caisse d'un véhicule sensiblement parallèle au sol lors d'un virage ou lorsque le véhicule est soumis à un fort vent latéral, de façon à éviter les dérapages et les accidents.

Ainsi, le document GB-A-1 157 016 décrit un dispositif de correction d'assiette selon le préambule de la revendication 1. Mais ce dispositif utilise une pluralité d'éléments interconnectés tels que leviers, ressorts et tiges qui ont autant de fonctions distinctes et qui sont agencés entre les bras oscillants et le distributeur hydraulique, ce qui rend le dispositif coûteux, complexe et relativement fragile.

Par ailleurs, le document FR-A-1 222 016 décrit un dispositif de suspension hydraulique comprenant deux tiges agissant sur un correcteur et liées aux roues d'un même côté du véhicule, et non pas aux roues d'un même essieu.

La présente invention a pour but de proposer un dispositif de correction d'assiette qui est particulièrement simple, peu coûteux et d'une excellente fiabilité de fonctionnement.

A cet effet, l'invention a pour objet un dispositif de correction d'assiette d'un véhicule automobile comprenant un train de roues avant et arrière liées à une caisse, d'une part au moyen de bras montés oscillants autour d'un axe par rapport à la caisse, et d'autre part au moyen d'éléments de suspension, caractérisé par au moins une paire de tringles associée à l'un et/ou l'autre des deux trains avant et arrière, chaque tringle étant montée articulée sur un élément d'appui solidaire de la caisse et comportant une première extrémité directement fixée à un bras oscillant et une deuxième extrémité coudée directement reliée à une tige d'actionnement d'une valve hydraulique susceptible de commander un moyen hydraulique de correction d'assiette du véhicule lors d'un mouvement relatif des bras par rapport à la caisse, lesquels bras provoquent la rotation des tringles autour de leur axe et donc de leur extrémité coudée permettant le déplacement des tiges.

Suivant un mode de réalisation, le moyen hydraulique précité est constitué par un vérin monté articulé d'un côté sur un élément de suspension de l'une des deux roues du train avant et/ou arrière, et de l'autre côté sur l'une des extrémités d'une barre anti-dévers montée pivotante sur la caisse transversalement à la direction longitudinale du véhicule, tandis que l'autre extrémité de la barre anti-dévers est rigidement liée à l'élément de suspension de l'autre roue.

On précisera encore ici que le piston du vérin précité définit deux chambres respectivement raccordées à la valve hydraulique précitée qui est intérieurement munie d'un tiroir solidaire de tiges ou analogues reliées à la deuxième extrémité formant levier des tringles, les deuxièmes extrémités des tringles étant orientées dans le même sens.

Selon encore une autre caractéristique du dispositif de cette invention, au moins une masse pendulaire est articulée sur la caisse autour d'un axe sensiblement parallèle à la direction longitudinale du véhicule et susceptible d'agir à l'encontre du déplacement de l'une des tiges précitées.

Suivant un autre mode de réalisation, le moyen hydraulique précité est constitué par une sphère de suspension associée à l'élément de suspension de chaque roue du train avant et/ou arrière, et raccordée à la valve hydraulique précitée qui est intérieurement munie d'un tiroir solidaire de tiges ou analogues reliées à la deuxième extrémité formant levier des tringles, les deuxièmes extrémités desdites tringles étant orientées dans des sens opposés.

Le dispositif selon cette invention est encore caractérisé par le fait que, sur le circuit hyraulique de raccordement de la valve hydraulique à l'un et/ou l'autre des vérins précités, est interposée une sphère hydraulique associée à un régulateur, commandé par des moyens de détection, et permettant ou non la communication dudit circuit avec la sphère hydraulique qui comporte, comme connu en soi, deux chambres séparées par une membrane et contenant respectivement un liquide et un gaz, ledit liquide étant celui du circuit hydraulique précité.

On précisera ici que les moyens de détection précités sont constitués par au moins un capteur détectant l'angle du volant de direction, la vitesse de rotation du volant et/ou la vitesse du véhicule, et relié à un calculateur susceptible de commander une électrovanne raccordée au régulateur.

Selon encore une autre caractéristique du dispositif de l'invention, le régulateur précité comprend un corps dans lequel coulisse un tiroir et dans lequel est ménagée à une extrémité une première chambre avec une butée pouvant coopérer avec le tiroir, et à l'autre extrémité une deuxième chambre contenant deux pièces constamment sollicitées en position écartée par au moins un ressort, et dont l'une coopère avec le tiroir, ledit corps comportant des communications avec l'un et/ou l'autre des vérins précités, avec la sphère hydraulique, avec la valve hydraulique précitée, et avec l'électrovanne raccordée à ladite première chambre.

Ce régulateur comprend encore un gicleur ménagé dans un passage prévu entre la communication avec la valve hydraulique et la comunication avec la sphère.

Suivant encore une autre caractéristique de l'invention, le circuit hydraulique permettant le raccordement de la valve hydraulique à l'un et/ou l'autre des vérins précités comporte au moins un orifice calibré.

Mais d'autres caractéristiques et avantages de l'invention apparaîtront mieux dans la description détaillée qui suit, et se réfère aux dessins annexés, donnés uniquement à titre d'exemple, et dans lesquels :
La figure 1 est une vue schématique et en perspective des trains avant et arrière d'un véhicule automobile équipé du dispositif conforme à l'invention ;
La figure 2 est une vue en perspective et à échelle agrandie de l'une des tringle fixée à un bras de roue et pouvant commander la valve hydraulique ;
La figure 3 est une vue schématique partielle et en coupe axiale de cette valve ;
Les figures 4 et 5 sont des vues très schématiques et de face d'un véhicule en position de virage sans correction et avec correction respectivement ;
La figure 6 est une vue en perspective et sensiblement de face du train avant déjà représenté sur la figure 1, mais comportant ici en plus une masse pendulaire ;
La figure 7 est une vue schématique et en perspective du train avant d'un véhicule équipé d'un autre mode de réalisation du dispositif conforme à l'invention mais destiné à réaliser ici une correction de hauteur ;
La figure 8 est encore une vue schématique et en perspective des trains avant et arrière d'un véhicule et illustre tout particulièrement le circuit hydraulique et les divers éléments qui peuvent lui être associés ; et
La figure 9 est une vue schématique et en coupe axiale d'un élément formant régulateur utilisé dans le circuit hydraulique précité.

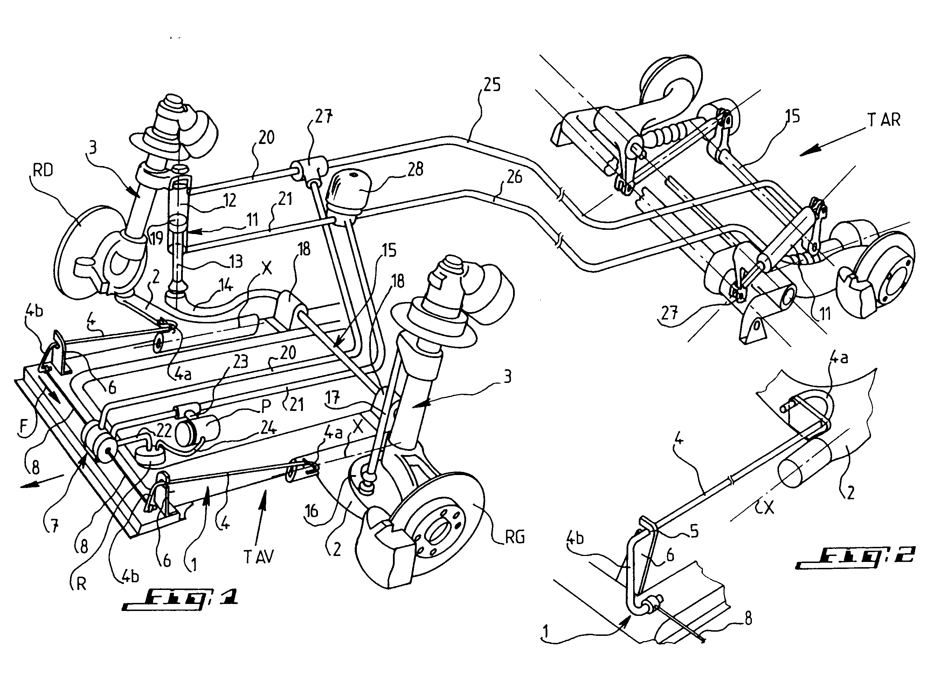

En se reportant à la figure 1, on voit le train avant TAV et le train arrière TAR d'un véhicule automobile, chaque train étant équipé de deux roues droite RD et gauche RG liées à la caisse du véhicule repérée d'une manière générale en 1.

Les roues sont reliées à la caisse 1 d'une part au moyen de bras 2 qui sont montés oscillants autour d'un axe X par rapport à la caisse 1, ledit axe X étant parallèle à la direction longitudinale du véhicule, et d'autre part au moyen d'éléments de suspension 3 solidaires des roues.

Toutes les dispositions ci-dessus sont bien connues et n'ont pas besoin d'être explicitées plus en détail.

Conformément à l'invention, une paire de tringles 4 est agencée suivant la direction longitudinale du véhicule au niveau du train avant TAV.

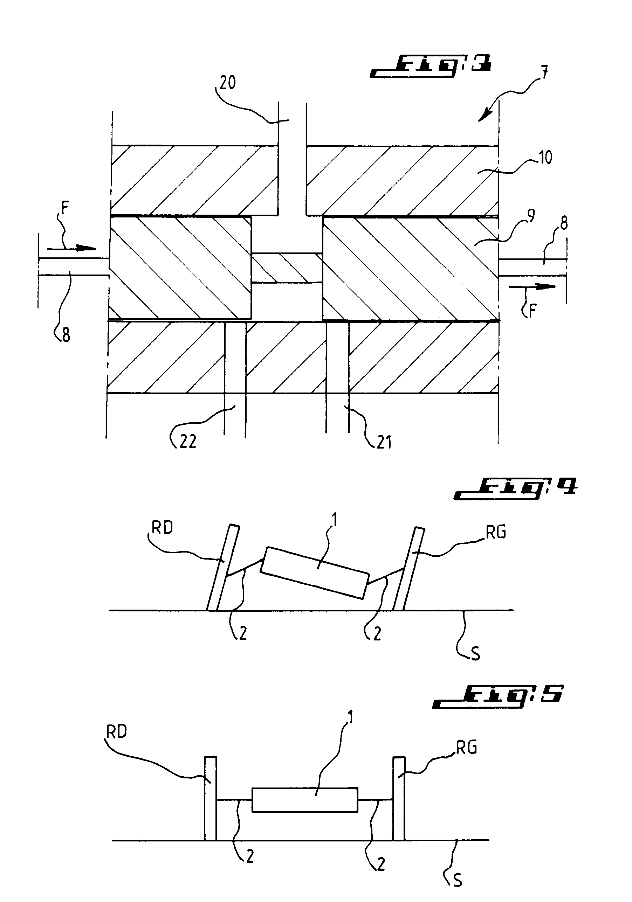

Chaque tringle 4, comme on le voit mieux sur la figure 2, est montée articulée en 5 sur un élément d'appui 6 solidaire de la caisse 1 et comporte deux extrémités, à savoir une première extrémité 4a fixée à un bras oscillant 2, et une deuxième extrémité 4b formant levier et susceptible d'actionner une valve hydraulique 7.

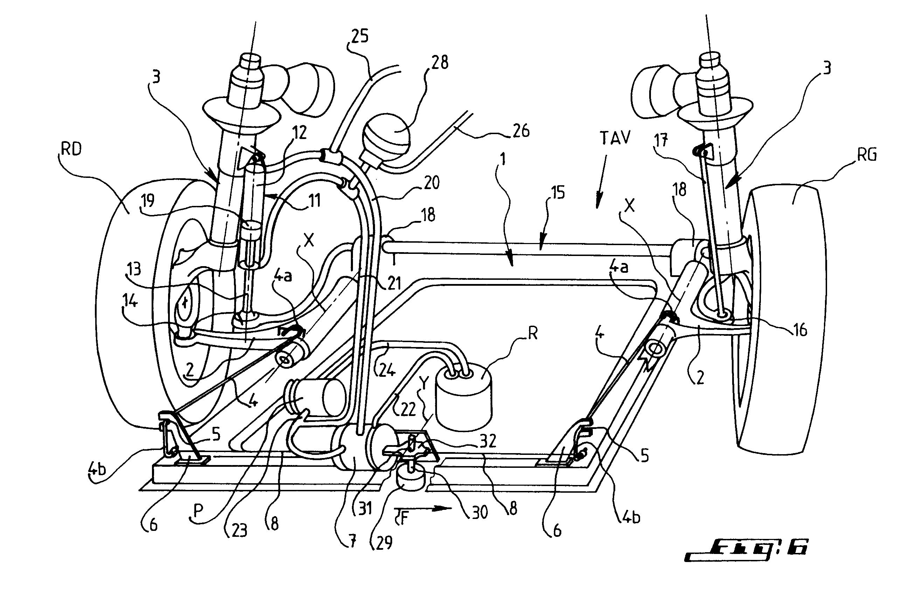

Plus précisément, les deux extrémités coudées ou formant levier 4b des deux tringles 4 sont orientées vers le bas et dans le même sens, et sont chacune reliées à une tige ou analogue 8 elle-même solidaire d'un tiroir 9 monté coulissant dans un boîtier 10, l'ensemble tiroir 9-boîtier 10 formant la valve hydraulique 7, comme cela est mieux visible sur la figure 3.

Revenant à la figure 1, on voit que le train avant TAV comprend en outre un vérin 11 dont le corps 12 est articulé sur l'élément de suspension 3 solidaire de la roue droite RD, et dont la tige 13 est articulée à l'une 14 des extrémités d'une barre anti-dévers 15 dont l'autre extrémité 16 est rigidement liée à l'élément de suspension 3 solidaire de la roue gauche RG par l'intermédiaire d'une tige rigide 17 par exemple.

La barre anti-dévers 15 est montée rotative dans des paliers 18 fixés sur la caisse 1 du véhicule. Et, comme on le voit bien sur la figure 1, cette barre 15 est agencée transversalement à la direction longitudinale du véhicule.

Le piston 19 du vérin 11 définit deux chambres qui sont respectivement raccordées par des conduites 20 et 21 à la valve hydraulique 7. Cette valve hydraulique 7 est également reliée à un réservoir R par un conduit 22, et une pompe P est reliée à la conduite 21 et au réservoir R respectivement par des conduites 23 et 24.

Bien que cela ne soit pas obligatoire, on peut prévoir, au niveau du train arrière TAR du véhicule, un vérin tel que 11 associé à l'une des roues, par exemple la roue arrière gauche, comme on le voit bien sur la figure 1. Dans ce cas, la conduite 20 est raccordée à une conduite 25 communiquant avec l'une des chambres de ce vérin arrière, tandis que la conduite 21 est raccordée à une conduite 26 communiquant avec l'autre chambre dudit vérin arrière. On observera ici que, contrairement à ce qui est le cas du vérin avant, la tige du vérin arrière est articulée en 27 sur le bras de roue, tandis que le corps de ce vérin arrière est articulé sur l'une des extrémités d'une barre anti-dévers arrière repérée elle-aussi en 15.

On voit sur la figure 1 que les conduites 20 et 25 sont reliées par un raccord 27 qui peut comporter des orifices calibrés (non représentés). Quant au raccordement ou à la jonction des conduites 21 et 26, elle peut se faire au niveau d'un accumulateur haute pression repéré en 28.

Le fonctionnement du système qui vient d'être décrit est le suivant.

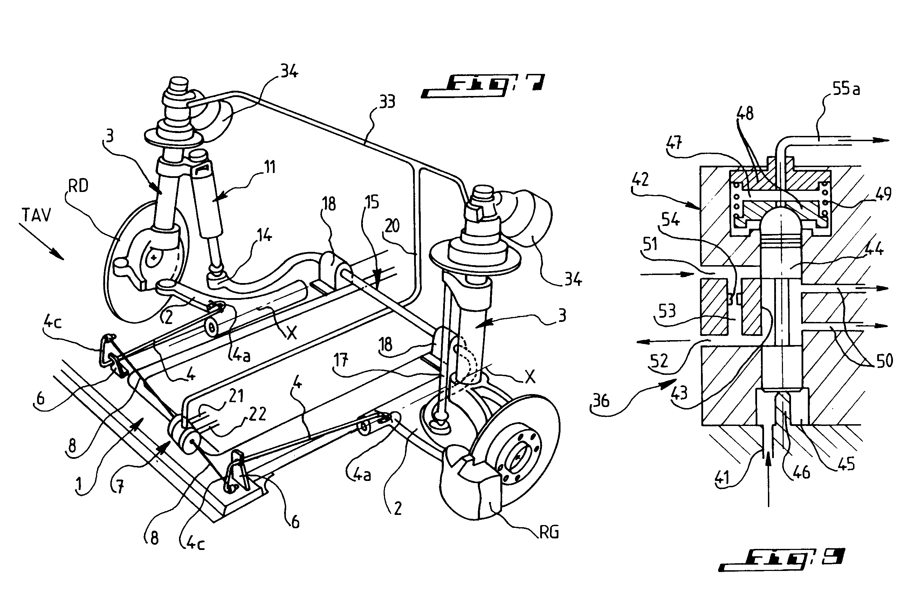

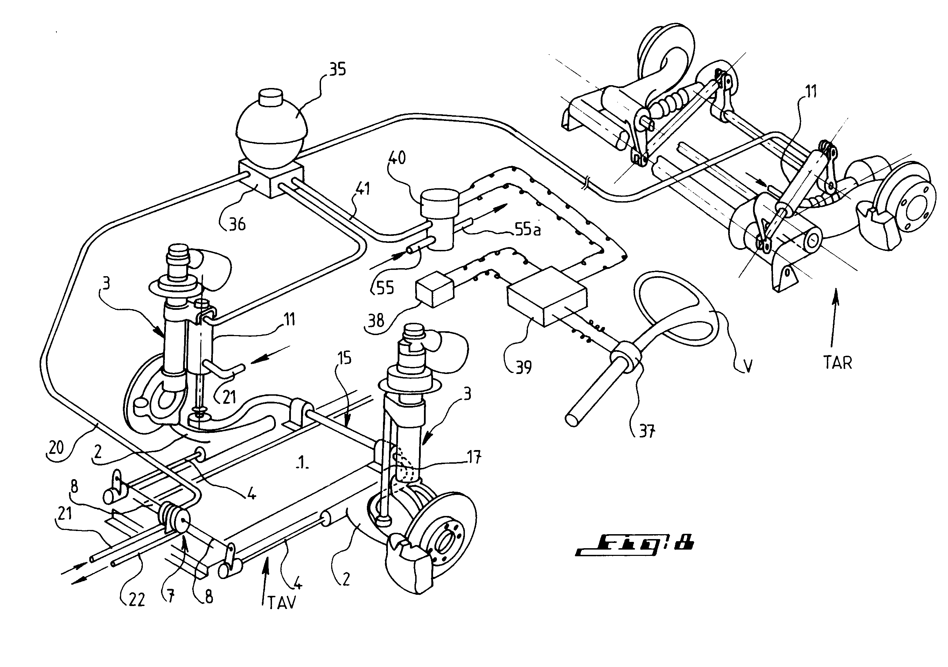

Lors d'un virage à droite par exemple, comme illustré sur la figure 4, la caisse s'incline par rapport au sol S, de sorte que le bras 2 associé à la roue droite RD pivote vers le bas par rapport à la caisse, tandis que le bras 2 associé à la roue gauche RG pivote vers le haut. Ainsi, les deux bras 2 provoqueront la rotation des tringles 4 et donc des extrémités formant levier 4b dans le même sens, et cela de façon à déplacer les tiges 8 suivant la flèche F. Ainsi, le tiroir 9 sera entraîné lui aussi suivant la flèche F, ce qui provoquera la mise en communication de la conduite 21 dite haute pression avec la conduite 20 dite de pression régulée et reliée à la chambre supérieure du vérin 11. Il en résultera un allongement de ce vérin qui va pousser l'extrémité 14 de la barre anti-dévers 15 vers le bas. Dès lors, une force importante vers le bas sera exercée sur la caisse 1 par l'intermédiaire du palier 18 situé du côté du vérin 11. Etant donné que le corps du vérin 11 est lié rigidement à la roue droite RD par l'intermédiaire de l'élément de suspension 3, et que, de l'autre côté, l'extrémité 16 de la barre anti-dévers 15 est liée rigidement à la roue gauche RG par la tige 17, il se produira un abaissement de la caisse 1 du côté droit avec une légère torsion de l'extrémité 14 de la barre anti-dévers 15, ce qui provoquera le redressement en position sensiblement horizontale et parallèle au sol S de la caisse 1, comme on le voit bien sur la figure 5. En d'autres termes, on corrigera ainsi l'inclinaison de la caisse du véhicule provoquée par la force centrifuge en virage ou par l'action d'un vent latéral violent.

Le fonctionnement qui vient d'être décrit s'applique également au vérin agencé sur le train arrière TAR, si toutefois ce vérin est effectivement prévu. Bien entendu le vérin arrière est monté de façon à agir sur la caisse 1 dans le même sens que le vérin agencé au niveau du train avant TAV.

En cas de virage à gauche ou de vent latéral du côté gauche, la séquence de fonctionnement inverse de celle décrite précédemment se produira.

On peut également prévoir, sans sortir du cadre de l'invention, que les deux vérins 11 situés respectivement à l'avant et à l'arrière du véhicule fonctionnent indépendamment, c'est-à-dire possèdent leur propre circuit hydraulique, et leur propre paire de tringles 4, étant entendu que la position des tringles 4 sera fonction de la position des bras 2 supportant les roues, ce qui veut dire que, pour le train arrière TAR, les tringles 4 seront disposées transversalement à la direction longitudinale du véhicule, puisque les bras de roues arrière pivotent autour d'un axe transversal.

On observera encore que le raccord 27 avec orifices calibrés permettra avantageusement un freinage du liquide dans le circuit hydraulique, ce qui évitera avantageusement une action instantanée de ce liquide en cas de petites irrégularités de la route qui seront par conséquent en quelque sorte absorbées par la suspension du véhicule.

On a donc réalisé suivant l'invention un dispositif très perfectionné de commande ou de correction anti-dévers pour véhicule automobile.

Dans le mode de réalisation représenté sur la figure 6, on a utilisé les mêmes repères pour désigner les éléments communs à ceux du dispositif illustré sur la figure 1.

La seule différence est qu'ici, on prévoit en plus une masse pendulaire 29 articulée sur la caisse 1 autour d'un axe Y sensiblement parallèle à la direction longitudinale du véhicule.

Cette masse pendulaire 29 est solidaire d'une petite tige 30 passant au travers d'un orifice 31 ménagé dans une pièce 32 faisant partie de l'une des tiges 8, en l'occurence celle située du côté de la roue gauche RG, comme on le voit bien sur la figure 6.

Le rôle de cette masse pendulaire 29 est le suivant. En cas de virage accentué du véhicule, le pneumatique associé à la roue extérieure au virage, par exemple la roue gauche RG en cas de virage à droite, a tendance à s'écraser, ce qui peut provoquer un déplacement de la tige 8 précitée vers la gauche de la figure 6, c'est-à-dire à l'opposé de la flèche F mentionnée précédemment. Pour compenser ce déplacement parasite ou indésirable, la masse pendulaire 9, sollicitée vers la gauche du véhicule en cas de virage à droite, poussera la tige 8 mentionnée ci-dessus dans le sens de la flèche F, c'est-à-dire à l'encontre du déplacement de la tige 8 sous l'effet de l'écrasement du pneumatique.

Bien entendu, le poids de la masse pendulaire 29 est calculé et adapté en fonction des caractéristiques du véhicule considéré et de la correction souhaitée.

On se reportera maintenant à la figure 7 illustrant une variante du dispositif selon l'invention adaptée à la correction de la hauteur au sol d'un véhicule.

Dans cette variante on a utilisé les mêmes repères que précédemment pour désigner les éléments communs.

Dans cette variante, les extrémités 4c des tringles 4, opposées aux extrémités 4a, sont orientées en sens contraire l'une de l'autre. De plus, la conduite 20, dite de pression régulée est connectée à une conduite 33 reliée à des sphères de suspension 34 associées aux éléments de suspension du train avant TAV.

Le fonctionnement est le suivant.

Si par exemple la caisse 1 s'abaisse par rapport aux deux roues RD et RG, les bras 2 pivotent vers le haut par rapport à la caisse 1 de sorte que, si l'on regarde le véhicule côté face avant, l'extrémité 4c du côté de la roue droite RD pivotera vers la droite, et l'extrémité 4c de l'autre tringle 4 située du côté de la roue gauche RG pivotera elle aussi dans le même sens. Il en résulte un déplacement des deux tiges 8 dans le même sens, c'est-à-dire vers la droite, et par conséquent un déplacement du tiroir 9 de la valve hydraulique 7 vers la droite. Dès lors, la mise en communication de la conduite haute pression 21 avec la conduite 20 dite de pression régulée sera assurée, et une correction de hauteur sera effectuée par l'intermédiaire des sphères de suspension 34.

Bien entendu, si c'est la caisse 1 qui remonte par rapport aux deux roues, le fonctionnement inverse se produira, comme on le comprend.

On remarquera ici que le système qui vient d'être décrit peut être prévu également au niveau du train arrière du véhicule, et la conduite 20 peut évidememnt être reliée aux sphères de suspension du train arrière.

On observera encore qu'à la paire de tringles 4 visible sur la figure 7 peut être adjointe une autre paire de tringles (non représentées), telles que celles visibles sur la figure 1 et actionnant elles aussi par des tiges 8 une valve hydraulique telle que 7, susceptible de commander le vérin 11 agencé entre l'élément de suspension et l'extrémité 14 de la barre anti-dévers 15, de façon à obtenir ainsi une correction anti-dévers en plus de la correction de hauteur précédemment expliquée.

En se reportant à la figure 8, on voit un dispositif de correction anti-dévers schématisé correspondant à celui de la figure 1, mais dans lequel le circuit hydraulique de raccordement de la valve hydraulique 7 aux vérins 11 avant et arrière est équipé d'une sphère hydraulique 35 associée à un régulateur 36 commandé par des moyens de détection qui seront décrits ci-après et qui permettent ou non la communication du circuit hyrdraulique avec la sphère 35 qui comporte, comme connu en soi, deux chambres séparées par une membrane et contenant respectivement le liquide du circuit hydraulique et un gaz.

Les moyens de détection sont constitués par un capteur 37 détectant l'angle du volant de direction V ainsi que la vitesse de rotation de ce volant, ainsi que par un autre capteur 38 détectant la vitesse linéaire du véhicule. Les deux capteurs 37 et 38 sont reliés à un calculateur 39 susceptible de commander une électrovanne 40 raccordée au régulateur 36 par un conduit 41.

En se reportant à la figure 9, on voit que le régulateur 36 associé à la sphère hydraulique 35 comprend un corps 42 muni d'un alésage 43 dans lequel coulisse un tiroir 44.

Le corps 42 est muni à l'une de ses extrémités d'une première chambre 45 dans laquelle fait saillie une butée 46 et où débouche la conduite 41 citée précédemment. Cette butée 46, comme on le voit bien sur la figure, coopère avec une extrémité du tiroir 44. A l'autre extrémité du corps 42, est ménagée une deuxième chambre 47 contenant deux pièces 48 qui sont constamment sollicitées en position écartée par un ressort 49, et dont l'une coopère avec l'autre extrémité du tiroir 44.

Le corps 42 comporte en outre deux passages ou communications 50 respectivement avec les vérins 11 avant et arrière. Il comporte en outre une communication 51 avec la valve hydraulique 7, ce passage étant relié à la conduite 20 dite de pression régulée. Le corps 42 comporte encore un passage 52 communiquant avec la sphère hydraulique 35. De plus, un passage 53 est prévu entre les deux passages précités 51 et 52, ce passage étant muni d'un gicleur 54. Enfin, on a montré en 55a un conduit de retour de fuites qui peut être par exemple relié au réservoir R visible sur les figures 1 et 6.

On décrira brièvement le fonctionnement du système illustré aux figures 8 et 9.

En position normale du véhicule, c'est-à-dire sans inclinaison notable de la caisse 1, le régulateur 36 se trouve dans la position repésentée sur la figure 9, c'est-à-dire que l'une des extrémités du tiroir 44 prend appui sur la butée 46, tandis que l'autre extrémité du tiroir 44 obture le passage 51. C'est dire que le liquide présent dans la conduite 20 est en communication avec les vérins avant et arrière à travers le passage 53 avec gicleur 54 et le passage 52 communiquant également avec la sphère hydraulique 35. Ainsi, ladite sphère procurera à la correction anti-dévers une certaine souplesse, en même temps que le gicleur 54, freinant le passage du liquide, procurera avantageusement un freinage du liquide acheminé aux vérins avant et arrière.

Toutefois, dans certains cas, une telle souplesse ou un tel "amortissement" de la correction n'est pas désirable car, dans certains cas, notamment en cas de virage assez brutal ou de vitesse relativement rapide, il convient que le véhicule réagisse quasi-instantanément. C'est pourquoi on peut court-circuiter la sphère hydraulique 35 et le gicleur 54, lorsque les paramètres détectés par les capteurs 37 et 38 dépassent une valeur prédéterminée. Dans ce cas là, le calculateur 39 agira sur l'électrovanne 40 qui mettra en communication le conduit 41 avec une conduite haute pression 55 (figure 8). Il en résultera une augmentation de pression dans la chambre 45 et donc un actionnement du tiroir 44 à l'encontre de la force du ressort 49, ce qui, comme on le comprend en se reportant à la figure 9, entraînera l'obturation du passage 52, et la mise en communication du passage 51 directement avec l'alésage 43 et les passages 50 communiquant avec les vérins avant et arrière. En d'autres termes, il y a communication directe entre la valve hydraulique 7 et les vérins, sans passer par le gicleur 54 et sans pratiquement aucune communication avec la sphère hydraulique 35. On se retrouve par conséquent dans les mêmes conditions de correction anti-dévers que celles décrites en référence à la réalisation de la figure 1.

On remarquera encore ici que la barre anti-dévers 15 peut avoir une flexibilité appropriée et prédéterminée en fonction du mode de réalisation choisi. Ainsi, dans la réalisation de la figure 1, la barre anti-dévers aura une flexibilité relativement grande, alors que dans la réalisation de la figure 8, la barre anti-dévers sera plus rigide, puisque la souplesse de la correction d'assiette du véhicule sera obtenue par la sphère hydraulique 35.

Bien entendu, l'invention n'est nullement limitée aux modes de réalisation décrits et illustrés qui n'ont été donnés qu'à titre d'exemple.

C'est ainsi que le nombre de tringles associées aux bras de roues et la disposition de ces tringles au niveau du train de roues avant et/ou arrière peuvent être choisis de façon appropriée.

## Revendications

1. Dispositif de correction d'assiette d'un véhicule automobile, comprenant un train de roues avant et arrière liées à une caisse (1) d'une part au moyen de bras (2) montés oscillants autour d'un axe (X) par rapport à la caisse (1) et d'autre part au moyen d'éléments de suspension (3), caractérisé par au moins une paire de tringles (4) associée à l'un et/ou l'autre des deux trains avant et arrière, chaque tringle (4) étant montée articulée (5) sur un élément d'appui (6) solidaire de la caisse (1) et comportant une première extrémité (4a) directement fixée à un bras oscillant (2) et une deuxième extrémité coudée (4b, 4c) directement reliée à une tige (8) d'actionnement d'une valve hydraulique (7) susceptible de commander un moyen hydraulique de correction d'assiette du véhicule lors d'un mouvement relatif des bras (2) par rapport à la caisse (1), lesquels bras provoquent la rotation des tringles (4) autour de leur axe et donc de leur extrémité coudée (4b, 4c) permettant le déplacement des tiges (8).

2. Dispositif selon la revendication 1, caractérisé en ce que le moyen hydraulique précité est constitué par un vérin (11) monté articulé d'un côté sur l'élément de suspension de l'une des deux roues du train avant et/ou arrière, et de l'autre côté sur l'une (14) des extrémités d'une barre anti-dévers (15) montée pivotante sur la caisse (1) transversalement à la direction longitudinale du véhicule, tandis que l'autre extrémité (16) de la barre anti-dévers (15) est rigidement liée à l'élément de suspension (3) de l'autre roue.

3. Dispositif selon la revendication 2, caractérisé en ce que le piston (19) du vérin précité (11) définit deux chambres respectivement raccordées à la valve hydraulique précitée (7) qui est intérieurement munie d'un tiroir (9) solidaire de tiges ou analogues (8) reliées à la deuxième extrémité (4b) formant levier des tringles précitées, les deuxièmes extrémités (4b) de ces tringles étant orientées dans le même sens.

4. Dispositif selon l'une des revendications 1 à 3, caractérisé par au moins une masse pendulaire (29) articulé sur la caisse (1) autour d'un axe (Y) sensiblement parallèle à la direction longitudinale du véhicule, et susceptible d'agir sur l'une des tiges précitées (8).

5. Dispositif selon la revendication 1, caractérisé en ce que le moyen hydraulique précité est constitué par une sphère de suspension (34) associée à l'élément de suspension (3) de chaque roue du train avant et/ou arrière, et raccordée à la valve hydraulique précitée (7) qui est intérieurement munie d'un tiroir (9) solidaire de tiges ou analogues (8) reliées à la deuxième extrémité (4c) formant levier des tringles précitées, les deuxièmes extrémités (4c) de ces tringles étant orientées dans des sens opposés.

6. Dispositif selon l'une des revendications 1 à 4, caractérisé en ce que, sur le circuit hydraulique de raccordement de la valve hydraulique (7) à l'un et/ou l'autre des vérins précités (11), est interposée une sphère hydraulique (35) associée à un régulateur (36), commandé par des moyens de détection permettant ou non la communication dudit circuit avec la sphère hydraulique (35) comportant, comme connu en soi, deux chambres séparées par une membrane et contenant respectivement un liquide et un gaz, ledit liquide étant celui du circuit hydraulique précité.

7. Dispositif selon la revendication 6, caractérisé en ce que les moyens de détection précités sont constitués par au moins un capteur (37, 38) détectant l'angle du volant de direction, la vitesse de rotation du volant et/ou la vitesse du véhicule, et relié à un calculateur (39)susceptible de commander une électrovanne (40) raccordée au régulateur (36).

8. Dispositif selon la revendication 6 ou 7, caractérisé en ce que le régulateur précité (36) comprend un corps (42) dans lequel coulisse un tiroir (44) et dans lequel est ménagée à une extrémité une première chambre (45) avec une butée (46) pouvant coopérer avec le tiroir (44) et à l'autre extrémité une deuxième chambre (47) contenant deux pièces (48) constamment sollicitées en position écartée par au moins un ressort (49) et dont l'une coopère avec le tiroir, ledit corps comportant des communications (50, 52, 51) avec l'un et/ou l'autre des vérins précités (11), avec la sphère hydraulique (35), avec la valve hydraulique précitée (7), et avec l'électrovanne (40) raccordée à ladite première chambre (45).

9. Dispositif selon la revendication 8, caractérisé par un passage (52) avec gicleur (54) prévu entre la communication (51) avec la valve hydraulique (7) et la communication (52) avec la sphère (35).

10. Dispositif selon l'une des revendications 1 à 5, caractérisé en ce que le circuit hydraulique permettant le raccordement de la valve hydraulique (7) à l'un et/ou l'autre des vérins précités (11) comporte au moins un orifice calibré.

## Claims

1. Device for the trim position correction of an automotive vehicle comprising a set of front and rear wheels connected to a car body (1) on the one hand by means of arms (2) mounted in swinging relationship about an axis (X) with respect to the car body (1) and on the other hand by means of suspension elements (3), characterized by at least one pair of links (4) associated with one and/or the other one of the two sets of front and rear wheels, each link (4) being pivotally mounted (5) onto a bearing element (6) made fast to the car body (1) and comprising a first end (4a) directly fastened to an oscillating arm (2) and a second bent end (4b, 4c) directly connected to a rod (8) for the actuation of a hydraulic valve (7) adapted to control a hydraulic means for the correction of the trim position of the vehicle during a relative motion of the arms (2) with respect to the car body (1), which arms cause the rotation of the links (4) about their axis and therefore of their bent end (4b, 4c) permitting the displacement of the rods (8).

2. Device according to claim 1, characterized in that the aforesaid hydraulic means is constituted by a jack (11) pivotally mounted with one side onto the suspension element of one of the two wheels of the set of front wheels and/or rear wheels and with the other side onto one (14) of the ends of an antibanking bar (15) pivotally mounted onto the car body (1) transverselly of the longitudinal direction of the vehicule whereas the other end (16) of the antibanking bar (15) is rigidly connected to the suspension element (3) of the other wheel.

3. Device according to claim 2, characterized in that the piston (19) of the aforesaid jack (11) defines two chambers respectively connected to the aforesaid hydraulic valve (7) which is provided internally with a spool (9) made fast to rods or the like (8) connected to the second end (4b) forming a lever of the aforesaid links, the second ends (4b) of these links being oriented in the same direction.

4. Device according to one of claims 1 to 3, characterized by at least one pendulum mass (29) pivotally connected onto the car body (1) about an axis (Y) substantially parallel to the longitudinal direction of the vehicle and adapted to act upon one of the aforesaid rods (8).

5. Device according to claim 1, characterized in that the aforesaid hydraulic means is constituted by a suspension sphere (34) associated with the suspension element (3) of each wheel of the set of front and/or rear wheels and connected to the aforesaid hydraulic valve (7) which is internally provided with a spool (9) made fast to rods or the like (8) connected to the second lever-shaped end (4c) of the aforesaid links, the second ends (4c) of these links being oriented in opposite directions.

6. Device according to one of claims 1 to 4, characterized in that in the hydraulic circuit connecting the hydraulic valve (7) to one and/or the other one of the aforesaid jacks (11) is interposed a hydraulic sphere (35) associated with a regulator (36), controlled by detection means permitting or not permitting the communication of the said circuit with the hydraulic sphere (35) comprising as known per se two chambers separated by a diaphragm and containing a liquid and a gas, respectively, the said liquid being the liquid of the aforesaid hydraulic circuit.

7. Device according to claim 6, characterized in that the aforesaid detection means are constituted by at least one sensor (37, 38) detecting the angle of the steering wheel, the speed of rotation of the steering wheel and/or the speed of the vehicle and connected to a computer (39) adapted to control an electrovalve (40) connected to the regulator (36).

8. Device according to claim 6 or 7, characterized in that the aforesaid regulator (36) comprises a body (42) in which is sliding a spool (44) and in which is formed at one end a first chamber (45) with a stop (46) which may co-operate with the spool (44) and at the other end a second chamber (47) containing two parts (48) constantly urged into a spread apart position by at least one spring (49) and one of which co-operates with the spool, the said body comprising communications (50, 52, 51) with one and/or the other one of the aforesaid jacks (11), with the hydraulic sphere (35), with the aforesaid hydraulic valve (7) and with the electrovalve (40) connected to the said first chamber (45).

9. Device according to claim 8, characterized by a passageway (52) with a spray nozzle (54) provided between the communication (51) with the hydraulic valve (7) and the communication (52) with the sphere (35).

10. Device according to one of claims 1 to 5, characterized in that the hydraulic circuit permitting the connection of the hydraulic valve (7) to one and/or the other one of the aforesaid jacks (11) comprises at least one calibrated orifice.

## Patentansprüche

1. Vorrichtung zur Korrektur der stabilen Fahrtlage eines Kraftfahrzeugs, mit einem Satz von mit einem Wagenkasten (1) einerseits mittels in Bezug auf den Wagenkasten (1) schwenkbar um eine Achse (X) herum angeordneten Armen (2) und andererseits mittels Aufhängungselementen (3) verbundenen Vorder- und Hinterrädern, gekennzeichnet durch wenigstens ein dem einen und/oder dem anderen der beiden Vorder- und Hinterradsätze zugeordneten Paar von Lenkern (4), wobei jeder Lenker (4) an einem mit dem Wagenkasten (1) fest verbundenen Abstützelement (6) gelenkig (5) angeordnet ist und ein erstes unmittelbar an einem Schwenkarm (2) befestigtes und ein zweites unmittelbar an einer Stange (8) zur Betätigung eines hydraulischen Ventils (7) verbundenes gekröpftes Ende (4b, 4c) aufweist, welches Ventil geeignet ist, ein hydraulisches Mittel zur Korrektur der stabilen Fahrtlage des Fahrzeugs während einer relativen Bewegung der Arme (2) in Bezug auf den Wagenkasten (1) zu steuern, wobei die Arme das die Verschiebung der Stangen (8) gestattende Drehen der Lenker (4) um deren Achse herum, also ihres gekröpften Endes (4b, 4c) verursachen.

2. Vorrichtung nach Anspruch 1, dadurch gekennzeichnet, dass das vorgenannte hydraulische Mittel durch einen an der einen Seite an dem Aufhängungselement des einen der beiden Räder des Vorder- und/oder Hinterradsatzes und auf der anderen Seite auf das eine (14) der Enden einer an dem Wagenkasten (1) quer zur Längsrichtung des Fahrzeugs schwenkbar angeordneten Antiachssturzstange (15) gelenkig angeordneten Kraftzylinder (11) gebildet wird, während das andere Ende (16) der Antiachssturzstange (15) mit dem Aufhängungselement (3) des anderen Rades starr verbunden ist.

3. Vorrichtung nach Anspruch 2, dadurch gekennzeichnet, dass der Kolben (19) des vorgenannten Kraftzylinders (11) zwei jeweils an das vorgenannte hydraulische Ventil (7) angeschlossene Kammern bestimmt, welches Ventil innen mit einem mit Stangen oder dergleichen (8) fest verbundenen Schieber (9) versehen ist, welche mit dem einen Hebel bildenden Ende (4b) der vorgenannten Lenker verbunden sind, wobei die zweiten Enden (4b) dieser Lenker in derselben Richtung ausgerichtet sind.

4. Vorrichtung nach einem der Ansprüche 1 bis 3, gekennzeichnet durch wenigstens eine an dem Wagenkasten (1) um eine Achse (Y) herum angelenkte und mit der Längsrichtung des Fahrzeugs etwa parallele pendelartige Masse, die geeignet ist, auf eine der vorgenannten Stangen (8) einzuwirken.

5. Vorrichtung nach Anspruch 1, dadurch gekennzeichnet, dass das vorgenannte hydraulische Mittel durch eine dem Aufhängungselement (3) jedes Rades des Vorder- und/oder Hinterradsatzes zugeordnete und an das vorgenannte hydraulische Ventil (7) angeschlossene Aufhängungskugel (34) gebildet wird, welches Ventil innen mit einem mit Stangen oder dergleichen (8) fest verbundenen Schieber (9) versehen ist, welche mit dem zweiten einen Hebel bildenden Ende (4c) der vorgenannten Lenker verbunden sind, wobei die zweiten Enden (4c) dieser Lenker in entgegengesetzten Richtungen ausgerichtet sind.

6. Vorrichtung nach einem der Ansprüche 1 bis 4, dadurch gekennzeichnet, dass in dem hydraulischen Kreislauf zum Anschluss des hydraulischen Ventils (7) an dem einen und/oder dem anderen der vorgenannten Kraftzylinder (11) eine einem Regler (36) zugeordnete hydraulische Kugel (35) gefügt ist, welcher Regler durch die Verbindung des besagten Kreislaufes mit der hydraulischen Kugel (35) gestattende oder nicht gestattende Erfassungsmittel gesteuert wird, welche Kugel, wie an sich bekannt, zwei durch eine Membran getrennte und jeweils eine Flüssigkeit und ein Gas enthaltenden Kammern aufweist, wobei die besagte Flüssigkeit diejenige des vorgenannten hydraulischen Kreislaufes ist.

7. Vorrichtung nach Anspruch 6, dadurch gekennzeichnet, dass die vorgenannten Erfassungsmittel durch wenigstens einen den Winkel des Lenkrades, die Drehgeschwindigkeit des Lenkrades und/oder die Geschwindigkeit des Fahrzeugs ermittelnden und mit einem Rechner (39) verbundenen Messwertgeber (37, 38) gebildet werden, welcher Rechner geeignet ist, ein an den Regler (36) angeschlossenes Elektroventil (40) zu betätigen.

8. Vorrichtung nach Anspruch 6 oder 7, dadurch gekennzeichnet, dass der vorgenannte Regler (36) einen Körper (42) aufweist, in welchem ein Schieber (44) gleitet und in welchem an einem Ende, eine erste Kammer (45) mit einem Anschlag (46), der mit dem Schieber (44) zusammenwirken kann und an dem anderen Ende eine zweite, zwei Stücke (48) enthaltende Kammer (47) gebildet sind, welche Stücke ständig zur voneinander gespreizten Stellung durch wenigstens eine Feder (49) beaufschlagt sind und deren eines Stück mit dem Schieber zusammenwirkt, wobei der besagte Körper Verbindungen (50, 52, 51) mit dem einen und/oder dem anderen der vorgenannten Kraftzylinder (11), mit der hydraulischen Kugel (35), mit dem vorgenannten hydraulischen Ventil (7) und mit dem an die besagte erste Kammer (45) angeschlossenen Elektroventil (40) aufweist.

9. Vorrichtung nach Anspruch 8, gekennzeichnet durch einen zwischen der Verbindung (51) mit dem hydraulischen Ventil (7) und der Verbindung (52) mit der Kugel (35) vorgesehenen Durchlass (52) mit Spritzdüse (54).

10. Vorrichtung nach einem der Ansprüche 1 bis 5, dadurch gekennzeichnet, dass der den Anschluss des hydraulischen Ventils (7) mit dem einen und/oder dem anderen der vorgenannten Kraftzylinder (11) gestattende hydraulische Kreislauf wenigstens eine kalibrierte Öffnung aufweist.
